# EUROPEAN PATENT APPLICATION

(11) **EP 4 647 873 A1**
(43) Date of publication of application: **12.11.2025**
(21) Application number: 24175155.1
(22) Date of filing: 10.05.2024
(51) Int. Cl.: G06F 3/01, A63F 13/285, A63F 13/42, A63F 13/428, A63F 13/57, G06F 3/0338, G06F 3/038, G06F 3/033

(54) **SYSTEM AND METHOD FOR SIMULATING MOVEMENT OF AN OBJECT**

(71) Applicant: Max-Planck-Gesellschaft zur Förderung der Wissenschaften e.V., 80539 München (DE)
(72) Inventor: STROHMEIER, Paul, 66123 Saarbrücken (DE); DING, Yuran, 66123 Saarbrücken (DE); SABNIS, Nihar, 66123 Saarbrücken (DE)
(74) Representative: Hannke, Christian

(57) **Abstract**

The present invention relates to a method for simulating movement of a virtual object. The method comprises the steps:
a) providing a sensor device comprising at least one contact element, which can be brought into contact with a user and which comprises a sensor element to measure a micro-movement and/or a movement intention of the user; b) providing a vibration generator; c) providing a computing device; and d) establishing a data connection between the sensor device, the computing device and the vibration generator. The method is characterized by the steps of e) defining a virtual weight to which the weight of the virtual object in a virtual reality correlates; f) calculating at least one parameter selected from a group comprising acceleration, velocity and displacement based on the signal measured by the sensor element and the virtual weight defined in e); g) calculating a vibrotactile signal which correlates to a change of the parameter calculated in f); and h) applying the vibrotactile signal to the contact element. Furthermore, the invention relates to a system for simulating movement of an virtual object.

## Description

The present invention relates to a method for simulating movement of a virtual object or limb by providing a vibrotactile signal to a contact element, which can be brought into contacted with a user. Furthermore, the invention relates to a system for simulating movement of a virtual object or limb.

In the past many machine-human interfaces have been developed, which provide humans with information on diverse sensory channels. Most commonly, displays for visual information and speakers for acoustic information are used. Machine-human interfaces that operate on other sensory channels are far less common. Nevertheless, some tactile displays and grounded force feedback devices are known and increasingly used. Initial research results have also been published in the fields of temperature, gustatory or olfactory displays. One sensory modality which is rarely discussed in the context of displays is kinesthesia - the sense that enables embodied perception of movement of body parts. The words kinesthesia and proprioception are often used interchangeably, in context with this invention, kinesthesia should be understood as relating to the awareness of body movement, and proprioception should be understood as relating to the sense of the relative positioning of body parts.

The information conveyed by kinesthesia is important to humans in many ways. When moving, kinesthesia helps to understand the movements. This both helps preventing from injuring ourselves, by preventing overexertion of tendons and muscles, and also helps to better understand the arrangement and material qualities of the surrounding world. Thus, kinesthesia is relevant in a broad range of domains, starting from virtual reality (VR), where users might experience virtual embodied movement, to rehabilitation, where patients might be provided with a greater sense of movement to keep them motivated, or for sports training, where athletes are provided with detailed embodied feedback to optimize their performance.

In the past it has been tried to create altered kinesthetic experiences by manipulating the acoustic feedback of the body. This has been used to change the perceived weight of users or provided people with an experience of growing fingers or noses. Latest research showed that tendon vibrations can create a kinesthetic illusion of movement. Another approach of manipulating perceived kinesthesia is known as "redirected pointing". By altering the spatial mapping of the visual feedback, researchers have manipulated the objects users grasp or surfaces they touch. Distorting the visually perceived movement allows manipulating the actually performed movement without creating an experience of mismatch for the user.

However, until now no suitable method or universal kinesthetic display is known. Such a display should provide features such as augmenting and altering user actions with feedback, convincing movement perceptual experiences to stationary users, and directly actuating the user's body. The augmented, altered and induced movement experience should be embodied and not symbolic. Accordingly, the problem to provide such a display and methods has not yet been solved.

This problem is solved by the subject matter of the independent claims.

A first solution to this problem is a method for simulating movement of a virtual object. The method comprising the steps of:
a) providing a sensor device comprising at least one contact element, which can be brought into contact with a user and which comprises a sensor element to measure a micro-movement and/or a movement intention of the user;
b) providing a vibration generator;
c) providing a computing device; and
d) establishing a data connection between the sensor device, the computing device and the vibration generator;
e) defining a virtual weight to which the weight of the virtual object in a virtual reality correlates;
f) calculating at least one parameter selected from a group comprising acceleration, velocity and displacement based on the signal measured by the sensor element and the virtual weight defined in e);
g) calculating a vibrotactile signal which correlates to a change of the parameter calculated in f) ; and
h) applying the vibrotactile signal to the contact element.
This method allows a user to sense the vibrotactile signal at the contact element. The vibrotactile signal provides an impression of movement to the user.

In a preferred variant of the method the signal measured by the sensor element is detected along at least two directions. This provides the opportunity to detect movement intensions in a two-dimensional plane. More preferably the signal measured by the sensor element is detected along at least three directions, which further provides the opportunity to detect movement intensions in a three-dimensional space.

Preferably, the signal measured by the sensor element is a force applied to at least one contact element. The signal is preferably generated by at least one load cell and/or at least one force sensor. The load cell(s) and/or the one force sensor(s) is/are integrated in the contact element or is/are mechanically connected to the contact element. Thus, the signal can correlate to the force applied to the contact element by a user.

In a preferred embodiment, a time interval between detecting a signal by the sensor element and applying the vibrotactile signal to the contact element is ≤ 100 ms, preferably ≤ 50 ms, more preferably ≤ 25 ms, most preferably ≤ 15 ms, or even ≤ 10 ms, preferably ≤ 5 ms. Thus, the vibrotactile signal is considered by the user as a direct result of the detected signal, e.g. the force applied to the contact element.

Preferably, a frequency of the vibrotactile signal is ≥ 20 Hz, preferably ≥ 30 Hz, preferably ≥ 40 Hz, more preferably ≥ 50 Hz, and most preferably ≥ 60 Hz and ≤ 1000 Hz, preferably ≤ 800 Hz, preferably ≤ 500 Hz, more preferably ≤ 400 Hz, most preferably ≤ 300 Hz. It has been found that a vibrotactile signal having a frequency of these values is perceived by a user as correlating to a movement. A tactile stimulus of this frequency is perceived as movement of an object over a surface. Changes of the frequency are often perceived as changes in movement speed, movement direction and/or a change of properties of the sliding surface of the object or the surface on which the object slides.

In a preferred variant of the method, a frequency of the vibrotactile signal and/or an amplitude of the vibrotactile signal is modulated based on the parameter calculated in f). Thus, the perceived tactile stimulus can be adjusted, based on the parameter calculated in f), which preferably directly correlates to a signal measured by the sensor element. Preferably a stronger signal measured by the sensor element correlates to a higher frequency and/or amplitude of the vibrotactile signal. As mentioned above, a tactile stimulus of this frequency is perceived as movement of an object over a surface and changes of the frequency are often perceived as changes in movement speed, movement direction and/or a change of properties of the sliding surface. Thus, modulating the vibrotactile signal based on the parameter calculated in f) allows for providing a tactile stimulus to the user, which correlates to an amended acceleration, velocity, or displacement of the first object.

Preferably, the method includes a step of providing a display. On this display, the virtual object can be displayed. An advantage of this variant is, that the tactile stimulus perceived by the user can be supported or even intensified by the visual stimulus.

Preferably a virtual reality is displayed in the display. Virtual reality (VR) should be understood as a simulated experience that employs at least one display to give the user an immer-sive feel of a virtual world. The display can visually represent a virtual world and/or give the user an impression of a virtual environment in some other way. Often, the user's movements are detected, and the influence of this movement is mapped in the virtual world. Known applications of virtual reality include entertainment (particularly video games), education (such as medical, safety or military training) and business (such as virtual meetings).

Preferably a movement of the virtual object in a virtual reality is displayed, wherein the movement correlates to the parameter calculated in f). It has been found, that in this case the movement of the virtual object in the virtual reality as perceived by the user based on the tactile stimulus overlaps with the movement of the virtual object in the virtual reality as perceived by the user's eyes. Thus, a mismatch between the perceived movement of the virtual object based on the tactile stimulus and the perceived movement of the virtual object based on the visual stimulus can be avoided. As a consequence, such a combination of a tactile stimulus (or a vibrotactile feedback) and a visual stimulus (or visual feedback) is significantly better at conveying an embodied sense of movement to a user than a tactile stimulus or a visual stimulus alone.

In a preferred variant of the method, a position of the contact element remains constant. "A position remains constant" should be understood in this context as meaning that the contact element is not displaced in relation to the user, or only by a minimal distance of ≤ 1 cm, preferably ≤ 1 mm. This is a big advantage with respect to other VR interfaces since often the user immerses themself deeply in the virtual world and then forgets their surroundings in the real world. Movements by the user in the virtual world that are also carried out in the real world can lead to a collision with objects in the real world, which can result in damage to them or injury to the user. In the preferred variant of the method, it is not necessary that the user moves the contact element in the real world. The movement in the virtual world as well as the user's interaction with the contact element is preferably based on isometric actions of the user, which preferably only involve muscle contractions devoid of joint movement and are more preferably relying on force or torque.

Preferably, the method comprises defining a grain level and/or granularity, which correlates to the number of grains the virtual object encounters when moving a fixed distance. This grain level and/or granularity is preferably defined in grains per signal change. In this context, "signal change" should be understood as a change in the signal by a specified amount. Preferably, the signal change is a change in the applied force by a predefined amount. The amount can be positive (increased signal strength, e.g. increased force) or negative (reduced signal strength, e.g. reduced force). Accordingly, amending the signal strength by a large amount therefore results in the specified amount being exceeded several times in a short period of time.

In case every time the (input) signal change (e.g. the force) exceeds the predefined amount, a vibrotactile signal is generated, many vibrotactile signals are generated in a short period of time. The user perceives this high frequency of vibrotactile signals as a fast movement of the virtual object and/or movement of the virtual object along an uneven surface.

In a preferred embodiment, the rate at which vibrotactile grains are produced is proportional to the first derivative of the measured force signal. It has been found, that such a rate is considered to give a vibrotactile feedback which is considered to be very natural.

A further solution to the above-mentioned problem is a system for simulating movement of a virtual object. This system can optionally use a method as described above. The system comprises
- a sensor device comprising at least one contact element, which can be contacted by a user, and at least one force sensor element, which is suitable to sense a force applied to the contact element, a micro-movement of the user or a movement intention of the user;
- a vibration generator; and
- a computing device.

The sensor device, the computing device and the vibration generator are connected to each other via a data connection. The computing device is designed and set up to receive a value which correlates to a virtual weight of the virtual object in a virtual reality and to calculate at least one parameter selected from a group comprising acceleration, velocity and displacement based on the force applied to the contact element and the defined virtual weight. Furthermore, the computing device is designed and set up to calculate a vibrotactile signal based on a value which correlates to a change of the calculated parameter per predefined time interval. The calculated vibrotactile signal is output by the vibration generator at the contact element.

As mentioned above, the force sensor element has to be suitable to sense a force applied to the contact element, a micro-movement of the user or a movement intention of the user. It is not necessary for the signal to be triggered by a movement of the user and/or the contact element. The contact element can maintain a fixed position, even when a force is applied to it. The interaction of the user with the contact element can be based on an isometric action of the user. Thus, a force is applied to the contact element only because of the user's muscle contractions but without joint movements. This embodiment is especially advantageous in combination with other VR displays which hinder the user's visual perception of the environment, e.g. a headset, since unintended movement of the user in the real world can be omitted and accidentally interactions with surrounding objects can be avoided.

In a preferred embodiment of the system the contact element has a shape of at least one of a sphere, a hemisphere, a stick, a joystick, a steering stick, a wheel, a steering wheel, a controller, or a mouse. It has been found that a contact element of such shape can be easily held by the user and a force, a micro-movement of the user, or a movement intention of the user can be easily applied. Furthermore, these shapes allow input of control signals by the user in several directions.

Preferably, the vibration generator is a vibrotactile actuator. It preferably has a frequency range of ≥ 1 Hz, preferably ≥ 5 Hz, more preferably ≥ 10Hz to ≤ 5000Hz, preferably ≤ 2000Hz, more preferably ≤ 1000Hz, most preferably ≤ 500Hz. It has been found that a user perceives vibrations in this rage as especially suitable for simulating a natural movement of the contact element.

In a preferred embodiment the system or at least a part of the system is integrated an armrest, a control panel, a wrist rest, an operating panel, a chair, a wheelchair, a game controller, a VR controller or a glove. Preferably at least the sensor device and/or the contact element is integrated in an armrest, a control panel, a wrist rest, an operating panel, a chair, a wheelchair, a game controller, a VR controller or a glove. Integrating the system, the sensor device and/or the contact element into one of these items allows signal transfer from and/or to the user in a particularly secure and/or convenient way and/or with few restrictions on movement.

Preferably, the system comprises a display device, wherein the display device is preferably a virtual reality headset. Such a display device can intensify or confirm the user's perception based on the tactile stimulus. By displaying a virtual reality in the display device and more preferably a movement of a virtual object in this virtual reality, the user's perception of moving an object in the virtual reality based the tactile stimulus can be supported or even intensified by the visual stimulus. Especially when the movement of the virtual object in the virtual reality correlates to the interaction of the user with the contact element perception of movement can be intensified.

Further advantages, objectives and features of the present invention will be described, by way of example only, in the following description with reference to the appended figures.

The figures show:
- Fig. 1A - 1D: schematic illustration of possible perception of different kinesthetic displays,
- Fig. 2A - 2C: a schematic view of an example of a vibrotactile kinesthetic display,
- Fig. 3: a schematic illustration of possible perception of a kinesthetic display with "motionless movement"
- Fig. 4A, 4B: a schematic illustration of the user's input and synchronized haptic feedback (A) and an exemplary VR renderings of a path of movement of a virtual object (B),
- Fig. 5A - 5E: generic visualization of different tactile mapping algorithms,
- Fig. 6: a schematic illustration of a method for simulating movement of an virtual object,
- Fig. 7A, 7B: illustrations of estimated magnitude of experienced movement by haptic mappings (A) and of estimated naturalness of haptic feedback (B),
- Fig. 8A, 8B: illustrations of estimated magnitude of experienced movement (A) and visual gain levels that match the respective haptic grains (B),
- Fig. 9: illustrations of estimated belief in experienced movement.

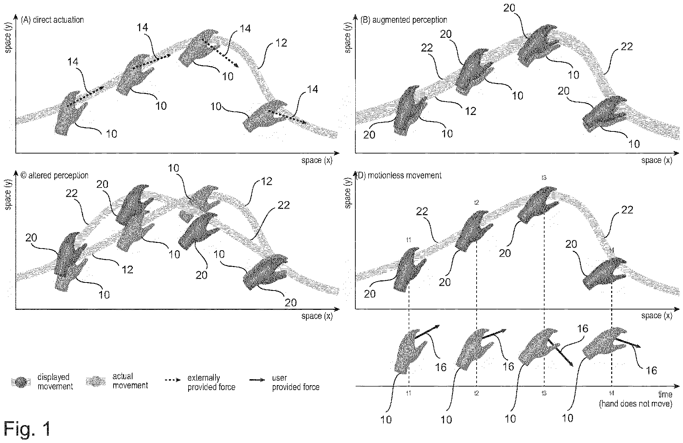

Fig. 1A - 1D show schematic illustration of possible perception of different kinesthetic displays.

Fig. 1A is a schematic illustration of usual perception of direct actuation. Direct actuation is the most obvious way of conveying a body movement. This is commonly done in many areas, for example when learning a sport or fine skill, it is common to take someone's hand 10 and literally guide them through that movement along a predefined path 12. A person applies an external force 14 in a desired direction (illustrated as vectors with dashed lines). The object to be moved (in this case a person's hand 10) moves along this direction. During direct actuation a system or technology takes control over the user's body, e.g. the user's hand 10. Systems based on direct actuation often use EMS.

In Fig. 1B augmented perception is illustrated. Augmented perception is the polar opposite to direct actuation. The goal of augmented perception is to provide the user with an augmented experience (illustrated as overlaying path 22) of their own, self initiated movements along the underlaying path 12). The goal is to - by presenting additional kinesthetic feedback - provide the user with greater control over their actions. This is a phenomenon we encounter in our day-to-day activities, i.e. drawing with a pencil on paper provides richer feedback of our movements than drawing with a pencil on a sheet of glass such as a tablet. Friction rendering devices could be considered an instant of such perception augmenting kinesthetic displays. Augmented perception can provide users with more detailed information of the very action they are doing.

As illustrated by the overlaying hands 10, 20 and paths 12, 22 the displayed movement (along path 22) is displayed in the same direction as it was actually carried out (along path 12), but its intensity is perceived differently.

As illustrated in Fig. 1C it is possible to alter perception of movement. As illustrated by the different positions of hands 10, 20 and paths 12, 22 the displayed movement (along path 22) differs with respect to the movement as it was actually carried out (along path 12). The so-called altered perception allows for example to make people believe they can perform movements which they otherwise could not, or changing how they experience their bodies.

However, the possibilities for changing the respective paths 12, 22 by altered perception are limited, as the body itself sets limits.

This limitation does not exist, if no motion of the body is needed any more as illustrated in Fig. 1D. the so-called "motionless movement" dies not require actual movement of the user's body, i.e. the user's hand 10. As illustrated at the bottom of Fig. 1D, the hand 12 does not move in the space spanned by axes (x) and (y). the hand 12 does not move but applies a force 16 to a sensor. From the changes of this force 16 over time a virtual movement path 22 con be calculated. For example by transforming pressure cues, or other movement-onset signals into feedback of movement it is possible that the user will experience tactile feedback of a movement which he do not perform.

By enabling experiencing motion even when the user remains motionless, the limits of the user's body can be overcome. This offer opportunities for a user to perform and perceives movements (in a virtual reality) that he might not otherwise be able to perform, be it due to physical limitations or space constraints.

An important distinction between the different kinesthetic displays as illustrated in Figs. 1A - 1D is the locus of control. For direct actuation (Fig. 1A), the control typically lies with the display, while for augmented perception (Fig. 1B) the control typically lies with the user. Altered perception Fig. 1C) and motionless movement (Fig. 1D) allow that the movement experiences provided with such displays is initiated by the user, or that the movement experiences are provided to the user externally. Even combinations of these both movement experiences are possible.

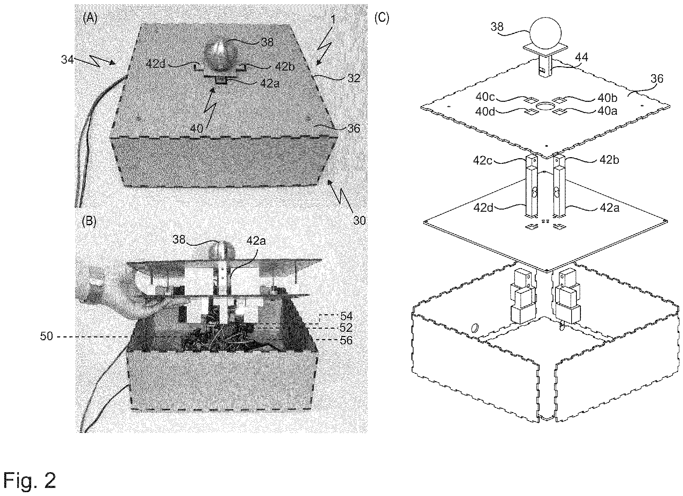

Fig. 2A - 2C are schematic views of an example of a vibrotactile kinesthetic display.

Fig. 2A is an oblique perspective view of an example of a vibrotactile kinesthetic display 30. The display comprises a housing 32, providing an internal space for accommodating further components (not shown) of the display 30. The housing 32 has a first opening 34 on its top side 36 to accommodate a contact element 38. In the illustrated example the contact element 38 is a spherical metal handle (55mm in diameter).

Beside the first opening, four additional openings 40a - 40d are arranged in the top surface 36 of the enclosure 32 to accommodate one of four load cells 42a - 42d (load cell 42c not visible in Fig 2A but in Fig. 2C). For convenience of mechanical design and to avoid unwanted coupling, the four load cells 42a - 42d were mounted vertically. They are arranged to detect any force applied to the spherical contact element 38 in four directions within the horizontal plane when users initiate movement. The arrangement of the components is illustrated in more detail in the exploded view of Fig. 2C.

The contact element 38 was fixed to avoid wobbling, which might hamper the perception of movement. A washer was fitted between the four load cells 42a - 42d to prevent any additional force on the load cells in the resting state.

The contact element 38 was connected to a vibrotactile actuator 44. In the exemplary embodiment illustrated in Fig. 2B a HapCoil-One vibrotactile actuator from Actonika (frequency range 10Hz-1000Hz) was used. The vibrotactile actuator 44 was located in a 3D-printed PLA casing to directly vibrate the contact element 38. The casing 46 was designed to mount the actuator 44 vertically and constrain the vibration propagation along a screw into the contact element 38.

The load cells 42a - 42d are each connected to load cell amplifier board 50 (in this embodiment a HX711 load cell amplifier board 50 modified to have a maximum sampling frequency of 80Hz). The data amplified by the amplifier board 50 are sent to a development board 52 using I2C communication protocol. As development board 52 a Teensy 4.1 was used.

It would also have been possible to only use two load cells and measure positive and negative pressure applied to them. However, it was found to be advantageous, to use four load cells 42a - 42d to measure force directly in four directions (forward, backward, left, and right). The left and right signals were combined in software to form the x dimension, while the forward and backward signals were combined to form the y dimension.

The signals from the load cells were sampled by 80Hz, which was the maximum sampling frequency of the used HX711 analog to digital converter 50. The vibrotactile signals were produced by haptic servos which used the Teensy Audio Library capable of running at the highest rate of 44.1 KHz 2. The HX711 was polled at 80Hz, while the haptic signal was updated at > 200 Hz. The output from the microcontroller was then converted to analog signals using a PT8211 DAC shield 54. The analog signal was amplified using a Visaton 2.2LN amplifier 56 and rendered into vibrations using a Hapcoil-One 3.

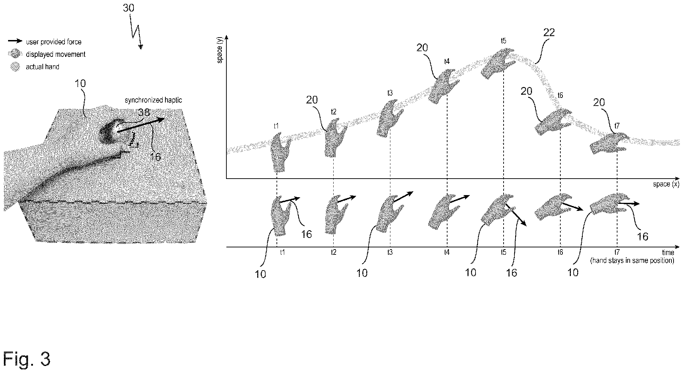

Fig. 3 is a schematic illustration of possible perception of a kinesthetic display 30 with "motionless movement". The vibrotactile kinesthetic display 30 is that one as illustrated in Fig. 2A-C. Every force 16b applied to the contact element 38 is detected and a correlating path 22 of movement of a virtual hand 20 is calculated. Preferably the path 22 is calculated continuously. However, the position of the virtual hand 20 and the force 16 applied to the contact element 38 by the (real) hand 10 is only shown for seven different time points t1 - t7. While the virtual hand 20 moves in the space spanned by axes (x) and (y) along the path 22, the real hand 10 (as well as the contact element 38) stays at the same position.

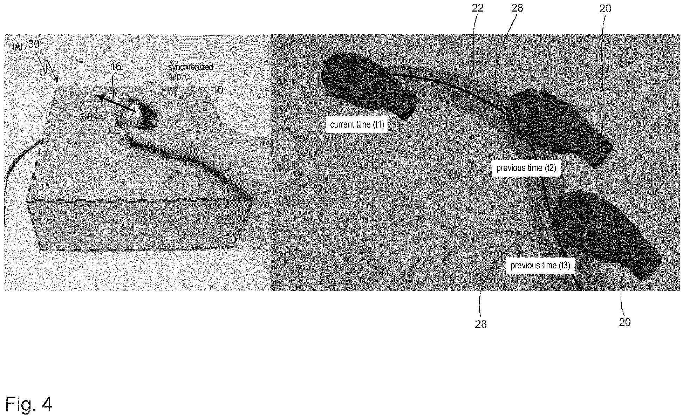

Fig. 4A and 4B are similar to the illustration of Fig. 3. However, additionally to the movement of the virtual hand 20 along the path 22 perceived by the vibrotactile display, the haptic feedback given at the contact element 38 (Fig. 4A), is further supported by VR renderings (Fig. 4B). The path 22 of movement of a virtual object 28 is visually represented at a headset. Thus, the realism of the experience could even be increased because the information regarding the movement of the virtual object is perceived by two independent stimuli.

The VR scenario illustrated in Fig. 4B features a hand avatar 22 pushing a virtual sphere 28 (which is similar to that one of the contact element 38 in the real world) on a pebbled plane in Unity3D. Hand tracking was enabled by the Oculus Hand Tracking Library and the Oculus Integration package in Unity. The hand avatar and the sphere in VR represented the user's way of grabbing/pushing the spherical handle in the real world.

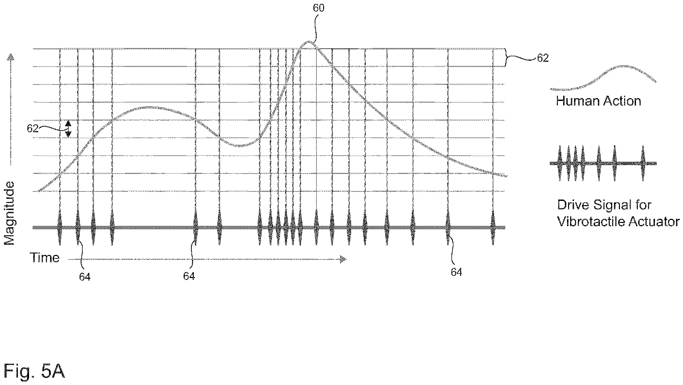

Fig. 5A - 5E are visualizations of different tactile mapping algorithms. Fig. 5A illustrates the general concept of the mapping process. At the abscissa, the time is plotted. The magnitude (of an undefined physical quantity) is plotted on the ordinate. Each time the magnitude changes a predefined amount 62, a drive signal 64 for the vibrotactile actuator is output. In other words, when the line 60 (corresponding to measures of user action), crosses one of the horizontal dotted lines (representing bins), a vibrotactile pulse is triggered. Accordingly, the frequency of following drive signals is higher when the curve 60 is steep and lower when the curve 60 is flatter.

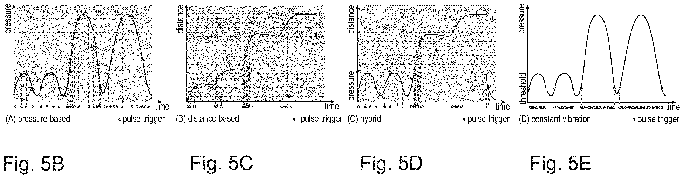

In Fig. 5B - 5D a visualization of different tactile mapping algorithms as illustrated in Fig. 5A are shown. These diagrams differ in the physical quantity plotted on the ordinate. In Fig. 5B a "pressure based mapping" is illustrated, where a drive signal 64 for the vibrotactile actuator is output every time a multiple of a specified pressure difference 62 is exceeded. Here the magnitude of instantaneous force in the direction of movement is mapped against a maximum of 10N with 300 grains.

In contrast thereto Fig. 5B shows a similar diagram where a drive signal 64 for the vibrotactile actuator is output every time a multiple of a specified distance 62 (in the virtual reality) is passed by the virtual object. For the so-called "distance based mapping" a movement simulation was made by transforming the force signal used for the pressure based mapping to a position. Grains were couple to this virtual position, thereby creating an experience similar to a grain-based friction illusion along the virtual movement path 22. The output of the movement simulation model is mapped against a maximum instantaneous displacement value of 0.01m with 400 grains.

The two different trigger conditions of Fig. 5B and Fig. 5C result in a different sequence of drive signals 64 for the vibrotactile actuator.

Some users reported that when distance based mapping was used, movement onset and the endings of movements did not feel compelling. To address this, a so-called "hybrid mapping" (Fig. 5D) has been developed. This mapping used a pressure-based mapping up to a predefined force, in this example a force of 1.2N in the direction of movement. This value was selected to roughly match the force needed to overcome the static friction for moving a 0.5kg object on a desk. When forces exceed 1.2N, the mapping was changed to be distance-based.

For comparative reasons in Fig. 5E an alternative mapping is shown, which displays continuous vibration when force is exerted.

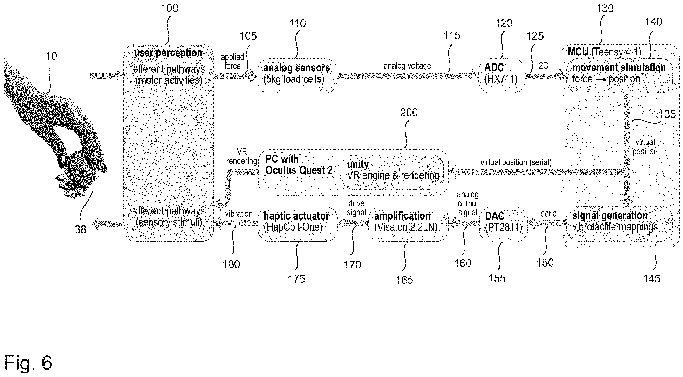

Fig. 6 is a schematic illustration of a method for simulating movement of a virtual object. The box 100 on the left of the illustration symbolizes the contact element 38 as shown on the very left. Here the system receives the user's input 105, e.g. a force 105 applied by the user's hand 10. The input is detected by sensors 110, which generate an electric signal 115 correlating to the strength of the input signal. The analog electric signal is converted to a digital signal 125 by an AD converter. The digital signal 125 then can be processed by a computer system 130.

In step 140, the computer system 130 calculates a (virtual) position 135 based on the digital signal 125. Additionally, an output signal 150 is calculated in step 145, which includes an output signal 150 based on the vibrotactile mappings. The signal 150 is converted to an analog output signal 160 by a DA converter 155. The analog output signal 160 is amplified in step 165 and converted to a drive signal 170.

The drive signal 170 is received by a vibration generator in step 175, which in the example is a haptic actuator. Based on the drive signal 170 the haptic actuator generates a vibration 180 of the contact element 100, where the vibration 180 can be perceived by the user. As illustrated by this sequence of steps, the vibration 180 is based on the user's input signal 105. Thus, there is a correlation between the input signal 105 and the vibration 180. The intensity and/or frequency of the vibration correlates to the intensity of the input signal and gives the illusion that the contact element 100 moves, based on the strength of the input signal 105.

Optionally the illusion of a moving (virtual) object can be further supported by a visual stimulus. This option is illustrated in the middle of the scheme. Based on the virtual position 135 a computer system 200 comprising a VR engine and equipped with a VR headset renders a virtual reality. The virtual reality and movement of the (virtual) object is then displayed at the headset, which is for example a Oculus Quest 2.

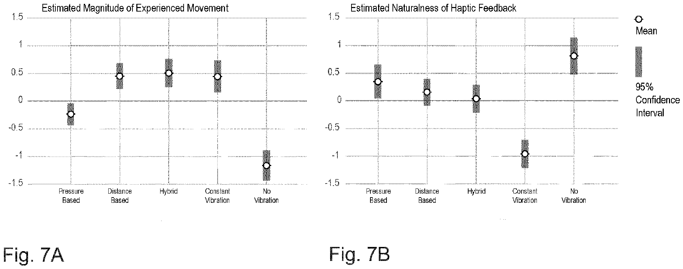

Fig. 7A and 7B illustrations of estimated magnitude of experienced movement by haptic mappings (Fig. 7A) and of estimated naturalness of haptic feedback (Fig. 7B). To obtain the data on which Figs. 7A and 7B are based, experiments with voluntary participants have been made. All participants have normal haptic perception. Participants remained standing so that their arm can rest naturally on a vibrotactile kinesthetic display as illustrated in Figs. 2 and 3. Participants were asked to imagine pushing a ball on a horizontal plane. They were then instructed to freely push the spherical metal handle in any direction. Participants were blindfolded and wore earphones that play white noise to mask the audiovisual cues. They were then instructed to rate the haptic experience based on the two following aspects:
(1) How large is the movement perception? Compared to other conditions, how much do you feel you can move the object? Note that it is not about estimating the distance you moved, but about the movability of the object. Assign large numbers if the experience suggests that the ball can be moved far, and small numbers if the movement is very subtle (Do not worry if you feel that the experience is realistic or not).
(2) How natural does the experience feel? Does it feel like something you are familiar with when interacting with physical materials, or does it feel more like a vibration created by a machine or device? Assign large numbers when the experience feels like something you might experience when interacting with physical materials, and small numbers when it feels artificial, like vibrations you might be familiar with from your phone or a machine. Don't worry about movement in this case, for example, even if you don't feel movement, but it feels natural like physical materials, you should give it a high score.

The 4 conditions as illustrated in Figs. 5B - 5E as well as a blind test without any vibration were presented in a balanced-Latin-square method, with 4 repetitions per participant, to avoid order effects. The results are shown in Fig. 7A. For Naturalness (Fig. 7B), it was found that both Constant Vibration and No Vibration were different from all others, while Hybrid, Distance Based, and Pressure Based mapping were similar. For magnitude of the Experienced Movement, it was found that Pressure Based mapping, and No vibration was significantly different from all other conditions, while Hybrid, Distance Based mapping, and Constant Vibration were similar

The No Vibration condition does not provide any feedback upon user action, and thus it is rated the lowest with movement and because it felt like a natural object that is stationary, participants rated it to have the highest natural score.

The Pressure Based condition was rated the most natural besides the no vibration control condition. However, the experienced movement, while natural, was felt to be very small.

Distance Based and Hybrid mappings have similar ratings in terms of naturalness and movement. They had relatively high movement scores while still being rated relatively natural. We found that distance based, and hybrid mappings are often associated with embodied moving experiences in the physical world, such as textures and frictions.

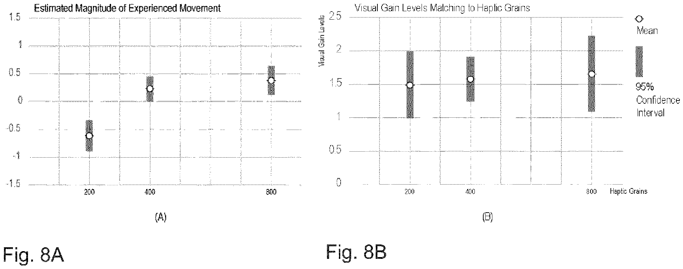

Figures 8A and 8B are illustrations of estimated magnitude of experienced movement (A) and visual gain levels that match the respective haptic grains (B). This experiment was performed to understand how different grains would impact the magnitude of experienced movement. In this study three different haptic grain levels (200, 400, 800) were compared using the distance based mapping.

A set of three haptic stimuli was created with the distance based mapping. Everything remained constant except for varying the grain levels (200, 400, and 800 respectively, mapping over a maximum instantaneous change of 0.01m in the motion simulation model). Vibration grains are composed of sine wave pulses, with amplitude and frequency increasing logarithmically with the acceleration of virtual motion calculated in the movement simulation model.

The study was conducted with voluntary participants, all of which have normal haptic perception. The participants were asked to rate only how large the movement perception is. There were 4 repetitions per condition per participant, and participants. It was found that increasing grains lead to a large estimate of experienced movement, however, with apparently diminishing returns above 400 grains.

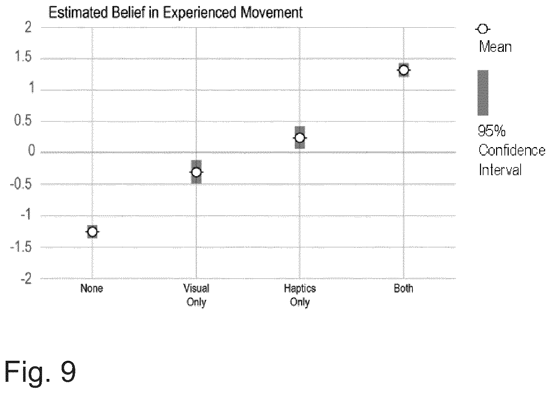

Fig. 9 is an illustration of estimated belief in the experienced movement. Following the above-mentioned study, the same participants performed we investigate the effect of visual renderings on the belief in embodied movement, using distance based haptic mapping, and the visual-haptic match setting that the participants selected in a previous study. Participants were asked to choose one of the visual-haptic match. All the haptic mappings were distance based and sine wave. The four conditions for the tests are:
1) both haptics and visual, which is the visual-haptic pairing that the participants selected (sphere on a pebbled plane with hand avatar pushing it);
2) haptics only, which is the distance based haptic mapping with the same grain level as the first condition but without haptic is mediated by a mental model of the materiality of the interaction, which was not controlled.
3) visual only, in which the user sees a virtual hand move, but receives not tactile feedback, and
4) no feedback of movement.

This study on the same participants from the above-mentioned study. Participants wore a pair of earphones playing white-noise and an Oculus Quest 2 displaying VR renderings.

They were asked to push the ball around just as they would push any ball in the real world around. Participants were given the same instructions on performing magnitude estimation as in the above-mentioned studies. They were asked to rate their belief in movement with the following prompt:
How strongly do you believe in the embodied movement? Think about how much you feel your hand / the sphere is moving comparing to what you would experience in the real world. Assign large numbers if the experience suggests that you are moving something, and small numbers.

As shown in Fig. 9 the belief in movement was highest in the both condition, where vibrotactile feedback was further supported by visual stimuli, followed by haptic only, and then visual only. The condition without any vibration was rated as the least convincing movement condition. Although the haptic only condition induced more belief in movement than the visual only condition on average, some participants found it more convincing to see the visual rendering whereas some do not.

The applicant reserves his right to claim all features disclosed in the application document as being an essential feature of the invention, as long as they are new, individually or in combination, in view of the prior art. Furthermore, it is noted that in the figures features are described, which can be advantageous individually. Someone skilled in the art will directly recognize that a specific feature being disclosed in a figure can be advantageous also without the adoption of further features from this figure. Furthermore, someone skilled in the art will recognize that advantages can evolve from a combination of diverse features being disclosed in one or various figures.

### List of reference symbols

- 1: System
- 10: Hand (real hand)
- 12: Path of (real) movement
- 14: External force
- 16: Force
- 20: Hand (virtual hand)
- 22: Path of (virtual) movement
- 28: virtual object
- 30: Vibrotactile kinesthetic display
- 32: Housing, enclosure
- 34: First opening
- 36: Top side, top surface of the enclosure
- 38: Contact element
- 40a-d: additional opening
- 42a-d: load cells
- 44: vibrotactile actuator
- 46: vibrotactile actuator casing
- 50: Amplifier board
- 52: Necklace, second transceiver
- 54: DAC shield
- 56: Amplifier, Visaton 2.2LN amplifier
- 60: Human action, curve
- 62: Amount, threshold value for signal change
- 64: Drive signal for vibrotactile actuator
- t1 - t7: time points
- x, y: Axes

## Claims

1. Method for simulating movement of a virtual object, the method comprising the steps:
a) providing a sensor device comprising at least one contact element, which can be brought into contact with a user and which comprises a sensor element to measure a micro-movement and/or a movement intention of the user;
b) providing a vibration generator;
c) providing a computing device; and
d) establishing a data connection between the sensor device, the computing device and the vibration generator;
**characterized by**
e) defining a virtual weight to which the weight of the virtual object in a virtual reality correlates;
f) calculating at least one parameter selected from a group comprising acceleration, velocity and displacement based on the signal measured by the sensor element and the virtual weight defined in e);
g) calculating a vibrotactile signal which correlates to a change of the parameter calculated in f) ; and
h) applying the vibrotactile signal to the contact element.

2. Method according to claim 1, wherein the signal measured by the sensor element is detected along at least two directions, preferably at least three directions, wherein the signal is preferably a force applied to a contact element.

3. Method according to claim 1 or claim 2, wherein a time interval between detecting a signal by the sensor element and applying the vibrotactile signal to the contact element is ≤ 100 ms, preferably ≤ 50 ms, more preferably ≤ 25 ms, most preferably ≤ 15 ms, or even ≤ 10 ms, preferably ≤ 5 ms.

4. Method according to any of claims 1 to 3, wherein a frequency of the vibrotactile signal is ≥ 20 Hz, preferably ≥ 30 Hz, preferably ≥ 40 Hz, more preferably ≥ 50 Hz, and most preferably ≥ 60 Hz and ≤ 1000 Hz, preferably ≤ 800 Hz, preferably ≤ 500 Hz, more preferably ≤ 400 Hz, most preferably ≤ 300 Hz.

5. Method according to any of claims 1 to 4, wherein a frequency of the vibrotactile signal and/or an amplitude of the vibrotactile signal is modulated based on the parameter calculated in f), wherein preferably a stronger signal measured by the sensor element correlates to a higher frequency and/or amplitude of the vibrotactile signal.

6. Method according to any of claims 1 to 5, further comprising the step of providing a display, and displaying the virtual object on that display.

7. Method according to claims 6, wherein a movement of the virtual object in a virtual reality is displayed, wherein the movement correlates to the parameter calculated in f).

8. Method according to any of claims 1 to 7, wherein a position of the contact element remains constant.

9. Method according to any of claims 1 to 8, comprising defining a grain level and/or granularity, which correlates to the number of grains the virtual object encounters when moving a fixed distance and which is preferably defined in grains per signal change.

10. Method according to any of claims 1 to 9, comprising grain distributions, which correlates to a noise distribution, wherein the noise distribution is preferably selected from a group comprising white noise, blue noise, green noise, pink noise or a combination of any of these and arbitrarily defined distributions.

11. A system for simulating movement of a virtual object, in particular according to any of claims 1 to 10, the system comprising,
- a sensor device comprising at least one contact element, which can be contacted by a user, and at least one force sensor element, which is suitable to sense a force applied to the contact element, a micro-movement of the user or a movement intention of the user;
- a vibration generator; and
- a computing device; wherein
the sensor device, the computing device and the vibration generator are connected to each other via a data connection;
**characterized in that**
the computing device is designed and set up to receive a value which correlates to a virtual weight of the virtual object in a virtual reality and to calculate at least one parameter selected from a group comprising acceleration, velocity and displacement based on the force applied to the contact element and the defined virtual weight and to calculate a vibrotactile signal based on a value which correlates to a change of the calculated parameter per predefined time interval;
wherein the calculated vibrotactile signal is output by the vibration generator at the contact element.

12. A system according to claim 11, **characterized in that** the contact element has a shape of at least one of a sphere, a hemisphere, a stick, a joystick, a steering stick, a wheel, a steering wheel, a controller, or a mouse.

13. A system according to claim 11 or 12, **characterized in that** the vibration generator is a vibrotactile actuator, preferably having a frequency range of ≥ 1 Hz, preferably ≥ 5 Hz, more preferably ≥ 10Hz to ≤ 5000Hz, preferably ≤ 2000Hz, more preferably ≤ 1000Hz, most preferably ≤ 500Hz.

14. A system according to any of claims 11 to 13, **characterized in that** the system or at least part of the system, preferably the sensor device and/or the contact element is integrated an armrest, a control panel, a wrist rest, an operating panel, a chair, a wheelchair, a game controller, a vr controller or a glove.

15. A system according to any of claims 11 to 14, **characterized by** a display device, wherein the display device is preferably a virtual reality headset.
